# EUROPÄISCHE PATENTSCHRIFT

(11) **EP 3 609 732 B1**
(45) Veröffentlichungstag und Bekanntmachung des Hinweises auf die Patenterteilung: **21.04.2021**
(21) Anmeldenummer: 18702075.5
(22) Anmeldetag: 09.01.2018
(51) Int. Cl.: B60L 53/66

(54) **STEUERUNGSVORRICHTUNG UND VERFAHREN ZUR STEUERUNG EINER LADESÄULE**
CONTROL DEVICE AND METHOD FOR CONTROLLING A CHARGING COLUMN
DISPOSITIF DE COMMANDE ET PROCÉDÉ DE COMMANDE D'UNE COLONNE DE CHARGE

(30) Priorität: 10.04.2017 DE 102017206106
(43) Veröffentlichungstag der Anmeldung: 19.02.2020
(73) Patentinhaber: Ecog GmbH, 82041 Oberhaching (DE)
(72) Erfinder: HEUER, Jörg, 82041 Oberhaching (DE)
(74) Vertreter: Fink Numrich Patentanwälte PartmbB
(86) Internationale Anmeldenummer: PCT/EP2018/050396
(87) Internationale Veröffentlichungsnummer: WO 2018/188819

(56) Entgegenhaltungen:
- EP-A2- 2 769 871
- WO-A2-2013/123988
- US-A1- 2014 035 526
- US-A1- 2016 364 776

## Beschreibung

Die Erfindung betrifft eine Steuerungsvorrichtung und ein Verfahren zur Steuerung einer Ladesäule.

Elektrofahrzeuge bzw. zumindest teilweise mit elektrischer Energie angetriebene Fahrzeuge weisen mindestens einen Akkumulator auf, welcher in einem laufenden Betrieb des Elektrofahrzeugs regelmäßig zu laden ist. Zum Laden wird das Elektrofahrzeug an einer Ladesäule abgestellt, um dessen Akkumulatoren über ein Elektrokabel oder mittels Induktionsspulen aufzuladen. Ladesäulen können an einer Vielzahl möglicher Orte vorgesehen sein, beispielsweise an Parkplätzen von Autobahnraststätten, am Straßenrand, oder auch in Parkhäusern. Zur Abrechnung der entnommenen elektrischen Energie oder einer sonstigen Ladedienstleistung muss ein Betreiber einer Ladesäule zumindest Kenntnis über ein einer Identität des Ladesäulennutzer eindeutig zuzuordnendes Identifikationsdatum haben, über das zum Zweck einer Abrechnung oder Autorisierung eine Identifizierung gegebenenfalls auch über Dritte möglich ist.

Im Stand der Technik sind Verfahren bekannt, mit denen eine solche Identifizierung und Autorisierung eines Ladesäulennutzers an einer Ladesäule bewerkstelligt werden kann.

Bekannt ist beispielsweise ein Einsatz von Karten oder auch Kreditkarten zur drahtlosen Identifizierung eines Ladesäulennutzers. Mit Hilfe übergebener Identifikationsdaten der Karte wird in der Ladesäule - eventuell unter Beteiligung eines von der Ladesäule örtlich getrennten Autorisierungsserver - die Autorisierung des Karteninhabers überprüft, bevor eine Ladefreigabe seitens der Ladesäule erfolgt.

Angesichts einer alltäglichen Nutzung mobiler Endgeräte für Zahlungsvorgänge wird der Einsatz von Karten zur Identifikation und für Zahlungsvorgänge zunehmend obsolet. Mobile Endgeräte, insbesondere Smart Phones in Verbindung mit einer entsprechenden Applikation, werden häufig für eine Identifizierung eines Ladesäulennutzers verwendet. Nach Bestätigung der Identität - welche optional mit zusätzlichen Authentifizierungsmerkmalen wie Geheimzahleneingabe usw. einhergeht - erfolgt eine Autorisierung, also eine Ermittlung, ob der identifizierte Ladesäulennutzer zu einer Nutzung berechtigt ist, gefolgt von einer Auswahl und Ladefreigabe der durch den Ladesäulennutzer gewünschten Ladesäule.

Üblicherweise sehen derartige Verfahren zur Identifikation und zur Auswahl und Zuordnung einer Ladesäule vor, dass mit dem mobilen Endgerät eine Kommunikationsverbindung zu einem Autorisierungsserver aufgebaut wird, mit dem registrierte Ladesäulennutzer verwaltet werden und welches eine Zuordnung von Ladesäulen zu jeweiligen Ladesäulennutzern steuert. Über die Kommunikationsverbindung wird dem Autorisierungsserver eine Identität des Ladesäulennutzers sowie eine Identität einer ausgewählten Ladesäule mitgeteilt. Der Autorisierungsserver übermittelt, nach Authentifizierung und Prüfung einer Autorisierung des Ladesäulennutzers, eine Ladefreigabe an die ausgewählte Ladesäule, woraufhin der Ladesäulennutzer ein Starten des Ladevorgangs veranlassen kann.

Hierbei zeigen sich im Stand der Technik mehrere gravierende Nachteile. Insbesondere entlang von Fernstrecken installierte Ladesäulen befinden sich oftmals in einem Bereich, welcher nur unzureichend durch ein Mobilfunknetz versorgt ist, so dass ein Aufbau der Kommunikationsverbindung des mobilen Endgeräts mit dem Autorisierungsserver - oder auch alternativ: der Ladesäule - temporär gestört oder unmöglich ist. Da in einem solchen Fall keine Identifizierung des Ladesäulennutzers erfolgen kann, kann eine Ladefreigabe nicht erteilt werden.

Ein weiteres Problem bei einer Verwendung mobiler Endgeräte betrifft eine Bestimmung und Übermittlung der Identität der ausgewählten Ladesäule. Hierzu ist in bekannten Verfahren vorgesehen, die Ortskoordinaten des mobilen Endgeräts zu ermitteln und dem Ladesäulennutzer die an seinem derzeitigen Standort verfügbaren Ladesäulen an einer Anzeigeeinheit des mobilen Endgeräts anzuzeigen. Dieser kann dann die Identität der von ihm gewählten Ladesäule durch Auswahl aus einer der angezeigten Ladesäulen bestätigen. Eine Ermittlung der gegenwärtigen Ortskoordinaten eines mobilen Endgeräts erfolgt üblicherweise in Zusammenarbeit mit einem Satellitenortungssystem, z.B. einem vom Verteidigungsministerium der Vereinigten Staaten von Amerika betriebenen Global Positioning System oder GPS. Eine Lokalisierung über Satellitenortungssysteme kann jedoch große Ungenauigkeiten in der Ortsbestimmung aufweisen, insbesondere unmittelbar nach einem Einschalten des mobilen Endgeräts. Bei einer entsprechend großen Dichte benachbarter Ladesäulen führt diese ungenaue Lokalisierung zu einer Unbestimmtheit der gewählten Ladesäule.

Die Druckschrift US 2014/035526 A1 offenbart ein Verfahren zum kabellosen elektrischen Laden eines Fahrzeugs über eine Ladestation, wobei eine Kommunikation zwischen Ladestation und Fahrzeug stattfindet.

Die Druckschrift US 2016/364776 A1 offenbart ein Verfahren zur Steuerung des Ladevorgangs eines elektrischen Fahrzeugs mittels einer Ladestation, einem mobilen Endgerät sowie einem Cloud-Server. Dabei erfolgt unter Zwischenschaltung des mobilen Endgeräts eine Kommunikation zwischen dem elektrischen Fahrzeug und dem Cloud-Server, um den Ladevorgang zu autorisieren.

Aufgabe der vorliegenden Erfindung ist es, Mittel zur Steuerung einer Ladesäule unter Mitwirkung eines mobilen Endgeräts anzugeben, welche die im Stand der Technik bekannten Probleme vermeiden.

Die Aufgabe wird durch eine Steuerungsvorrichtung mit den Merkmalen des Patentanspruchs 1 bzw. des Patentanspruchs 2 gelöst.

Erfindungsgemäß ist eine Steuerungsvorrichtung vorgesehen, welcher Teil einer Ladesäule ist oder einer solchen zugordnet ist. Eine Ladesäule bezeichnet eine allgemeine Vorrichtung, an der eine Aufladung eines Fahrzeugs mit elektrischer Energie erfolgt und umfasst auch Ladestationen, Wall Boxes etc. Die Steuerungsvorrichtung dient, neben einer Zuordnung der Ladesäule zu einem zu ladenden Fahrzeug, erfindungsgemäß auch einer Zuordnung einer Steuerverbindung mit einem mobilen Endgerät eines Ladesäulennutzers, also üblicherweise dem Fahrzeugführer oder -halter, welcher einen Ladevorgang an seinem Fahrzeug durchführen will. Auf dem mobilen Endgerät wird eine geeignete Applikation zur Ausführung gebracht, durch welche die steuernden Verfahrensschritte durchgeführt oder unterstützt werden.

Die erfindungsgemäße Steuerungsvorrichtung weist eine Schnittstelle zum Fahrzeug auf, welche zum Empfang eines fahrzeugseitigen Berechtigungsnachweises eingerichtet ist. Diese Schnittstelle zum Fahrzeug ist beispielsweise galvanisch oder auch drahtlos ausgestaltet. Eine galvanische Schnittstelle erfolgt beispielsweise über ein Ladekabel, wobei die Datenübertragung mittels Powerline Communication, oder PLC, erfolgt, oder auch über ein zu dem Ladekabel parallel verlaufende bzw. einer im Ladekabel integrierten zu einer Ladeleitung parallel laufenden Datenleitung. Alternativ, insbesondere bei einer Durchführung des Ladevorgangs ohne Ladekabeln mit induktiven Ladespulen, ist die Schnittstelle drahtlos gestaltet. Die Schnittstelle zum Fahrzeug ist eingerichtet zum Empfang eines fahrzeugseitigen Berechtigungsnachweises, welcher in einer fahrzeugseitigen Steuerungsvorrichtung vorgehalten wird.

Der fahrzeugseitige Berechtigungsnachweis, in der Fachwelt auch als Credentials bekannt, dient einem gegebenenfalls temporären Nachweis einer Identität des Fahrzeugs bzw. des Ladesäulennutzer und kann ein oder mehrere Kennzeichnungen der Authentizität enthalten, im derzeitigen Stand der Technik meist durch digitale kryptografische Signaturen dargestellt. Der vom Fahrzeug übergebene Berechtigungsnachweis respektive die enthaltenen Signaturen können von einer Instanz außerhalb des Fahrzeugs überprüft werden, insbesondere von der Steuerungsvorrichtung oder von einem Autorisierungsserver, welcher mit der Ladesäule über ein Datennetzwerk oder über eine Steuerungsleitung verbunden ist. Dazu kann die überprüfende Instanz unter anderem die kryptografischen Signaturen komplett oder teilweise verifizieren anhand von entsprechendem Schlüsselmaterial. Dieses Schlüsselmaterial kann vom Fahrzeug bezogen werden, ggf. in Form eines Objektes, das wiederum von einer dritten Stelle authentifiziert wurde, die für Fahrzeug und Ladesteuerung vertrauenswürdig ist.

Der Nachweis erfolgt beispielsweise in Form einer Benutzerkennung in Verbindung mit mindestens einem Authentifizierungsmerkmal, welches beispielsweise unter Verwendung eines asymmetrischen Schlüsselpaares implementiert ist.

Ein Teilbereich des fahrzeugseitigen Berechtigungsnachweises umfasst beispielsweise eine maschinen- und menschenlesbare Charakterisierung des Fahrzeugs, wobei dieser Teilbereich nicht notwendigerweise die oben beschriebenen Authentifizierungsmerkmale enthält.

Die erfindungsgemäße Steuerungsvorrichtung weist darüber hinaus eine weitere Schnittstelle zu einem mobilen Endgerät des Ladesäulennutzers auf. Hierbei ist erfindungsgemäß eine drahtlose Nahfeldkommunikationsschnittstelle zur Verbindung mit einer entsprechenden Nahfeldkommunikationsschnittstelle des mobilen Endgeräts vorgesehen. Die Nahfeldkommunikationsschnittstelle ist in der Steuerungsvorrichtung des Patentanspruchs 1 für einen Austausch eines endgerätseitigen Berechtigungsnachweises mit einem mobilen Endgerät eingerichtet. Die Nahfeldkommunikationsschnittstelle in der Steuerungsvorrichtung des Patentanspruchs 2 ist für einen Austausch zumindest eines Berechtigungsnachweises umfassend den fahrzeugseitigen Berechtigungsnachweis mit einem mobilen Endgerät eingerichtet.

Die vorstehenden Ausführungen bezüglich digitaler kryptografischer Signaturen gelten analog für den endgeräteseitigen Berechtigungsnachweis. Der fahrzeugseitige Berechtigungsnachweis bildet mit dem endgerätseitigen Berechtigungsnachweises ein Berechtigungsnachweispaar, welcher im Vorfeld jeweils im Fahrzeug sowie im mobilen Endgerät hinterlegt wurden.

Eine Nahfeldkommunikationsschnittstelle bzw. Nahfeldkommunikation im Sinne dieser Beschreibung umfasst alle drahtlosen Kommunikationsweisen, welche nicht auf ein Übertragungsverfahren mit einem zellulären Mobilfunknetz beruhen. Insbesondere ist der Begriff Nahfeldkommunikationsschnittstelle bzw. Nahfeldkommunikation im Sinne dieser Beschreibung nicht auf das ähnlich lautende Übertragungsverfahren »Near Field Communication« oder NFC zum kontaktlosen Austausch von Daten per elektromagnetische Induktion beschränkt.

Die erfindungsgemäße Steuerungsvorrichtung gemäß Patentanspruch 1 weist eine Zuordnungseinheit zur Einrichtung einer Steuerverbindung über die Nahfeldkommunikationsschnittstelle mit dem mobilen Endgerät nach Empfang des fahrzeugseitigen oder des endgerätseitigen Berechtigungsnachweises auf. Die Steuerverbindung dient einer Steuerung der Ladesäule mit einer auf dem mobilen Endgerät zum Ablauf gebrachten Applikation. Eine insofern vorläufige Steuerverbindung mit der Ladesäule dient dem Zweck, dass ein Starten des Ladevorgangs schon im Voraus angefordert werden kann, wenngleich der tatsächliche Ladevorgang erfindungsgemäß erst nach einer positiven Überprüfung beider Berechtigungsnachweise erfolgt. Unter Steuerung der Ladesäule ist hier beispielsweise eine Anweisung zum Starten oder Beenden des Ladevorgangs zu verstehen.

Die erfindungsgemäße Steuerungsvorrichtung gemäß Patentanspruch 2 weist eine Zuordnungseinheit zur Einrichtung einer Steuerverbindung über die Nahfeldkommunikationsschnittstelle mit dem mobilen Endgerät nach Empfang des fahrzeugseitigen Berechtigungsnachweises oder nach Empfang eines endgerätseitigen Berechtigungsnachweises über die Nahfeldkommunikationsschnittstelle auf. Ferner ist die Zuordnungseinheit vorgesehen zur Zuordnung der Ladesäule zum Fahrzeug nach Empfang einer positiven Prüfungsnachricht auf Basis einer positiven Prüfung des fahrzeugseitigen Berechtigungsnachweises und des endgerätseitigen Berechtigungsnachweises durch das mobile Endgerät.

Die der Erfindung zugrundeliegende Aufgabe wird weiterhin durch ein Verfahren mit den Merkmalen des Patentanspruchs 7 bzw. des Patentanspruchs 8 und durch ein Verfahren mit den Merkmalen des Patentanspruchs 9 bzw. des Patentanspruchs 10 gelöst. Beiden Verfahren liegt die erfindungsgemäße Einrichtung einer Steuerverbindung zugrunde, allerdings variieren die erfindungsgemäßen Verfahrensschritte im Rahmen einer einheitlich aufgefundenen erfindungsgemäßen Lösung je nachdem, welcher Berechtigungsnachweis - fahrzeugseitiger oder endgerätseitiger - zuerst an der Steuerungsvorrichtung bzw. am mobilen Endgerät entgegengenommen wird.

Gemäß dem erfindungsgemäßen Verfahren nach Patentanspruch 7 und nach Patentanspruch 8 werden folgende Schritte durchgeführt:
a) Empfang zumindest eines Teilbereiches eines fahrzeugseitigen Berechtigungsnachweises von einer der Ladesäule zugeordneten Steuerungsvorrichtung;
b) Senden, durch die Steuerungsvorrichtung, zumindest des Teilbereiches des fahrzeugseitigen Berechtigungsnachweises über eine Nahfeldkommunikationsverbindung;
c) Empfang zumindest des Teilbereiches des fahrzeugseitigen Berechtigungsnachweises durch ein mobiles Endgerät; und;
d) Einrichtung einer Steuerverbindung zwischen dem mobilen Endgerät mit der Steuerungsvorrichtung über die Nahfeldkommunikationsschnittstelle nach Empfang zumindest des Teilbereiches des fahrzeugseitigen Berechtigungsnachweises.

Anschließend werden die Schritte e) bis g) des Patentanspruchs 7 bzw. die Schritte e) bis g) des Patentanspruchs 8 durchgeführt.

Die oben genannte Ausprägung des erfindungsgemäßen Verfahrens nach Patentanspruch 7 bzw. nach Patentanspruch 8 sieht vor, dass der fahrzeugseitige Berechtigungsnachweis zuerst an die der Ladesäule zugeordneten Steuerungsvorrichtung übergeben wird. Ein solches Verfahren wird erfindungsgemäß abgearbeitet, wenn der Ladesäulennutzer zunächst das Ladekabel zwischen Ladesäule und Fahrzeug verbindet und erst im Anschluss eine Nahfeldkommunikation zwischen seinem mobilen Endgerät mit der Ladesäule aufbaut.

Gemäß dem erfindungsgemäßen Verfahren nach Patentanspruch 9 und nach Patentanspruch 10 werden folgende Schritte durchgeführt:
a) Empfang zumindest eines Teilbereiches eines von einem mobilen Endgerät über eine Nahfeldkommunikationsverbindung gesendeten endgerätseitigen Berechtigungsnachweis von einer der Ladesäule zugeordneten Steuerungsvorrichtung; und;
b) Empfang zumindest eines Teilbereiches eines fahrzeugseitigen Berechtigungsnachweises von der Steuerungsvorrichtung.

Anschließend werden die Schritte c) bis e) des Patentanspruchs 9 bzw. die Schritte c) bis h) des Patentanspruchs 10 durchgeführt.

Die oben genannte Ausprägung des erfindungsgemäßen Verfahrens nach Patentanspruch 9 bzw. nach Patentanspruch 10 sieht vor, dass der endgerätseitigen Berechtigungsnachweis zuerst an die der Ladesäule zugeordneten Steuerungsvorrichtung übergeben wird. Ein solches Verfahren wird erfindungsgemäß dann abgearbeitet, wenn der Ladesäulennutzer zunächst eine Nahfeldkommunikation zwischen seinem mobilen Endgerät mit der Ladesäule aufbaut und erst im Anschluss das Ladekabel zwischen Ladesäule und Fahrzeug verbindet.

Die Erfindung zeichnet sich durch eine asynchrone - d.h. bezüglich ihrer Reihenfolge und ihres zeitlichen Ablaufs nicht festgelegten - Übermittlung von Berechtigungsnachweisen aus, welche in ihrer Zusammenwirkung mit einer Nahfeldkommunikationsschnittstelle zu einer vorläufigen Einrichtung einer vorläufigen Steuerverbindung zwischen der Ladesäule und dem Fahrzeug sowie einem mobilen Endgerät zur Steuerung des Ladevorgangs führt. Erst nachdem beide Berechtigungsnachweise vorliegen - siehe Ausgestaltungen der erfindungsgemäßen Steuerungsvorrichtung und des erfindungsgemäßen Verfahrens - wird dann eine endgültige Zuordnung der Ladstation zum Fahrzeug mit Steuerung der Ladesäule über das mobile Endgerät vorgenommen.

Ein weiterer Vorteil der Erfindung besteht darin, dass der Ladesäulennutzer keine Ladesäule auswählen muss. Eine nach Ausbildung der Steuerverbindung folgende Zuordnung der Ladesäule erfolgt durch eine Zusammenwirkung der mit der Nahfeldkommunikationsschnittstelle ausgebildeten Steuerverbindung und dem fahrzeugseitigen Berechtigungsnachweises.

Eine Verwendung einer Nahfeldkommunikationsschnittstelle gewährleistet in vorteilhafter Weise Unabhängigkeit von einer Mobilfunknetzabdeckung.

Weitere Ausgestaltungen der Erfindung sind Gegenstand der abhängigen Patentansprüche.

Eine erste Ausgestaltung ist auf die Zuordnungseinheit gerichtet, durch welche nach Einrichtung der über die Nahfeldkommunikationsschnittstelle eingerichteten Steuerverbindung mit dem mobilen Endgerät nunmehr eine Zuordnung der Ladesäule zum Fahrzeug veranlasst wird, insbesondere um eine Ladefreigabe zum Laden des Fahrzeugs zu starten und gegebenenfalls zu Stoppen.

Gemäß einer bevorzugten Ausgestaltung der Erfindung ist die Zuordnungseinheit eingerichtet zur Zuordnung der Ladesäule zum Fahrzeug mit Steuerung der Ladesäule durch das mobile Endgerät nach Empfang und positiver Prüfung beider Berechtigungsnachweise seitens der Steuerungsvorrichtung.

Alternativ kann vorgesehen sein, dass die Zuordnungseinheit eine Zuordnung der Ladesäule zum Fahrzeug auf Basis einer Steuerungsvorrichtungs-externen Prüfung veranlasst, nämlich nach Empfang einer positiven Prüfungsnachricht auf Basis einer positiven Prüfung beider Berechtigungsnachweise durch das mobile Endgerät. In dieser Ausgestaltung der Erfindung werden also der endgerätseitige Berechtigungsnachweises und der fahrzeugseitige Berechtigungsnachweises im mobilen Endgerät geprüft und ein Ergebnis der Prüfung an die Steuerungsvorrichtung gesendet, welche im Fall einer positiven Prüfung beider Berechtigungsnachweise die Zuordnung der Ladesäule zum Fahrzeug herstellt.

Im Weiteren werden Ausführungsformen des erfindungsgemäßen Verfahrens und der erfindungsgemäßen Steuerungsvorrichtung unter Bezug auf die beigefügten Figuren beschrieben.

Es zeigen:
- Fig. 1: ein Blockschaltbild zur Darstellung einer Ladeinfrastruktur in Zusammenwirkung mit erfindungsgemäßen Funktionseinheiten; und;
- Fig. 2: ein Ablaufbild zur Darstellung einer Ausführungsform des erfindungsgemäßen Verfahrens; und;
- Fig. 3: ein Ablaufbild zur Darstellung einer weiteren Ausführungsform des erfindungsgemäßen Verfahrens.

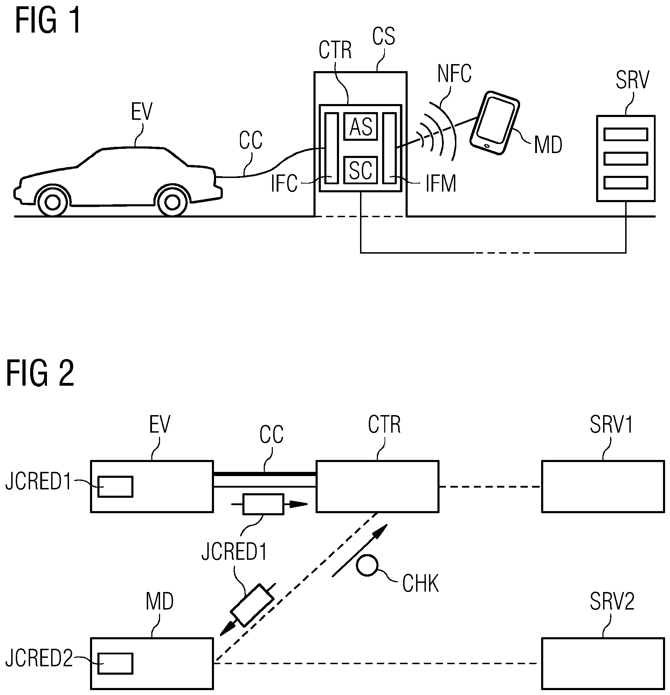

Fig. 1 zeigt ein an einer Ladesäule CS abgestelltes Fahrzeug EV. Eine Energieübertragung zwischen der Ladesäule CS und dem Fahrzeug EV erfolgt im dargestellten Ausführungsbeispiel über ein Ladekabel CC. Alternativ kann ein Laden des Fahrzeugs EV induktiv mittels mehrerer von der Ladesäule gespeister Induktionsspulen erfolgen. Weitere fachübliche Funktionskomponenten innerhalb der Ladesäule CS, welche die Bereitstellung und Aufbereitung des elektrischen Ladestromstroms betreffen, sind aus Übersichtlichkeitsgründen nicht dargestellt. Der Ladesäule CS ist eine erfindungsgemäße Steuerungsvorrichtung CTR zugeordnet oder in dieser integriert.

Die Steuerungsvorrichtung CTR weist eine Schnittstelle IFC zum Fahrzeug EV auf, welche zum Empfang eines fahrzeugseitigen Berechtigungsnachweises eingerichtet ist. Diese Schnittstelle IFC ist im vorliegenden Ausführungsbeispiel galvanisch ausgestaltet und mit dem Ladekabel CC verbunden. Eine Datenübertragung zwischen dem Fahrzeug EV und der Schnittstelle IFC erfolgt beispielsweise mittels Powerline Communication (PLC) über das Ladekabel CC oder alternativ über eine separate, parallel zum Ladekabel CC verlaufende - nicht dargestellt - Datenleitung. Ist die Ladesäule CS für ein induktives Laden eingerichtet, entfällt das Ladekabel CC zugunsten von - nicht dargestellten - induktiven Ladespulen, durch welche elektrische Energie induktiv an entsprechende - nicht dargestellte - Ladespulen des Fahrzeugs EV übertragen werden. Auch in einem solchen Fall ist die Schnittstelle IFC vorzugsweise drahtlos gestaltet.

Die Schnittstelle IFC zum Fahrzeug ist eingerichtet zum Empfang eines - nicht dargestellten - fahrzeugseitigen Berechtigungsnachweises, welcher in einer fahrzeugseitigen - nicht dargestellten - Steuerungsvorrichtung vorgehalten wird. Weitere Funktionseinheiten zur Einbringung des Ladestroms in das Ladekabel CC sind aus Übersichtsgründen nicht dargestellt.

Die erfindungsgemäße Steuerungsvorrichtung CTR weist eine weitere Schnittstelle IFM zu einem mobilen Endgerät MD des Ladesäulennutzers auf. Die drahtlose Nahfeldkommunikationsschnittstelle IFM ist über eine Luftschnittstelle NFC zur Verbindung mit einer entsprechenden - nicht dargestellten - Nahfeldkommunikationsschnittstelle des mobilen Endgeräts MD vorgesehen.

Die drahtlose und bidirektionale Luftschnittstelle NFC zwischen der Steuerungsvorrichtung CTR und dem mobilen Endgerät MD ist beispielweise unter Verwendung üblicher Nahfeldkommunikationsprotokolle ausgestaltet. Diese umfassen beispielsweise:
- WLAN (Wireless Local Area Network) bzw. WiFi (Wireless Fidelity), beispielsweise gemäß einem Kommunikationsstand der Standard-Familie IEEE 802.11;
- Bluetooth gemäß einem Kommunikationsstand IEEE 802.15.1, Bluetooth Low Energy oder BLE gemäß einer Erweiterung der Bluetooth-Spezifikationen, beispielsweise gemäß Bluetooth Low Energy Spezifikation 4.2; und/oder;
- Übertragungsverfahren zum kontaktlosen Austausch von Daten per elektromagnetischer Induktion mittels lose gekoppelter Spulen, auf welche auch als Near Field Communication Bezug genommen wird.

Die Nahfeldkommunikationsschnittstelle IFM ist für einen Austausch zumindest eines Teilbereichs eines endgerätseitigen Berechtigungsnachweises und/oder zumindest eines Teilbereichs des fahrzeugseitigen Berechtigungsnachweises mit einem mobilen Endgerät MD eingerichtet.

Die Steuerungsvorrichtung CTR weist darüber hinaus eine Zuordnungseinheit AS zur Einrichtung einer Steuerverbindung über die Nahfeldkommunikationsschnittstelle IFM mit dem mobilen Endgerät MD nach Empfang mindestens eines Berechtigungsnachweises auf. Die Steuerverbindung dient einer Steuerung der Ladesäule mit einer auf dem mobilen Endgerät zum Ablauf gebrachten Applikation. Eine insofern vorläufige Steuerverbindung mit der Ladesäule CS dient beispielsweise dem Zweck, dass ein Starten des Ladevorgangs schon im Voraus angefordert werden kann, wenngleich der tatsächliche Ladevorgang mit einer Zuordnung der Ladesäule CS zum Fahrzeug EV erst nach Vorliegen beider Berechtigungsnachweise erfolgt.

Hierzu ist die Zuordnungseinheit AS weiterhin eingerichtet zur abschließenden Zuordnung der Ladesäule CS zum Fahrzeug EV mit Steuerung der Ladesäule CS durch das mobile Endgerät MD nach Empfang und positiver Prüfung beider Berechtigungsnachweise. Unter Steuerung der Ladesäule ist hier beispielsweise eine Anweisung zum Starten oder zum Beenden des Ladevorgangs zu verstehen.

Die Steuerungsvorrichtung CTR weist optional eine Kommunikationseinheit SC zur Unterhaltung einer Datenkommunikation mit einem Autorisierungsserver SRV auf. Der Autorisierungsserver SRV unterstützt in bekannter Weise eine Benutzerverwaltung, Identifizierung sowie eine Autorisierung für den Ladevorgang seitens der Ladesäule CS. Außerdem kann dieser oder ein anderer Server weitere Aufgaben wie eine Ermittlung sowie eine Verrechnung der an der Ladesäule CS entnommenen elektrischen Energie übernehmen.

In Fig. 2 ist ein Ablaufbild zur Darstellung einer Ausführungsform des erfindungsgemäßen Verfahrens dargestellt. Gemäß dieser Ausführungsform des erfindungsgemäßen Verfahrens ist vorgesehen, dass ein fahrzeugseitiger Berechtigungsnachweis JCRED1 zuerst an die der Ladesäule CS zugeordnete Steuerungsvorrichtung CTR übergeben wird. Ein solches Verfahren wird erfindungsgemäß abgearbeitet, wenn der Ladesäulennutzer zunächst das Ladekabel CC zwischen Ladesäule CS und Fahrzeug EV verbindet und erst im Anschluss eine Nahfeldkommunikation NFC zwischen seinem mobilen Endgerät MD mit der Ladesäule aufbaut.

Mit einer Verbindung des Ladekabels CC zwischen der Ladesäule CS und dem Fahrzeug EV wird über eine - in der Zeichnung parallel zum dicker gezeichneten Ladekabel CC dargestellte - Datenverbindung zwischen dem Fahrzeug EV und der Steuerungsvorrichtung CTR der im Fahrzeug EV vorgehaltene fahrzeugseitige Berechtigungsnachweises JCRED1 an die Steuerungsvorrichtung CTR übertragen und von der Steuerungsvorrichtung CTR über die - in Fig. 2 aus Übersichtsgründen nicht dargestellte - fahrzeugseitige Schnittstelle IFC der Steuerungsvorrichtung CTR empfangen wird.

Die Steuerungsvorrichtung CTR verarbeitet die empfangene fahrzeugseitige Berechtigungsnachweises JCRED1 dahingehend, dass eine Zuordnung zwischen der der Ladesäule CS - welcher die Steuerungsvorrichtung CTR zugeordnet ist - und dem Fahrzeug EV herstellbar ist. Hierzu wird ein Teilbereich des fahrzeugseitigen Berechtigungsnachweises JCRED1 ausgewertet, welcher beispielsweise eine maschinen- und menschenlesbare Charakterisierung des Fahrzeugs EV umfasst.

Je nachdem, ob die die Ladesäule CS weitgehend autark arbeitet, oder ob eine Anbindung und Administration mehrerer Ladesäulen durch eine oder mehrere Zentralinstanzen vorgesehen ist, kann eine Identifizierung und Autorisierungsprüfung anhand des vom Fahrzeug übergebenen Berechtigungsnachweises JCRED1 durch einen Autorisierungsserver SRV1 vorgesehen sein, welcher mit der Steuerungsvorrichtung CTR über ein Datennetzwerk oder über eine - gestrichelt dargestellte - Steuerungsleitung verbunden ist.

Daraufhin stellt die Steuerungsvorrichtung CTR zumindest einen Teilbereich des fahrzeugseitigen Berechtigungsnachweises JCRED1 über die Nahfeldkommunikationsverbindung NFC zur Verfügung.

Ein betriebsbereites mobiles Endgerät MD eines Ladesäulennutzers kann diesem Teilbereich des fahrzeugseitigen Berechtigungsnachweises JCRED1 über die Nahfeldkommunikationsverbindung NFC empfangen. Nach Empfang des fahrzeugseitigen Berechtigungsnachweises JCRED1, oder eines Teilbereichs des fahrzeugseitigen Berechtigungsnachweises JCRED1, durch eine am mobilen Endgerät MD des Ladesäulennutzers zum Ablauf gebrachten Applikation erfolgt eine endgerätseitige Prüfung zumindest des Teilbereiches des fahrzeugseitigen Berechtigungsnachweises JCRED1 anhand eines endgerätseitig vorgehaltenen Berechtigungsnachweises JCRED2. Diese paarweise Prüfung der Berechtigungsnachweise JCRED1, JCRED2 umfasst im einfachsten Fall eine Prüfung einer Identität, einer Prüfsumme oder eines gemeinsamen Zertifikats oder Schlüsselpaares. Bei dieser Prüfung wird optional der Autorisierungsserver SRV2 beteiligt.

Der fahrzeugseitige Berechtigungsnachweis JCRED1 bildet mit dem endgerätseitigen Berechtigungsnachweises JCRED2 ein Berechtigungsnachweispaar, welcher im Vorfeld jeweils im Fahrzeug EV und/oder im mobilen Endgerät sowie alternativ oder zusätzlich im Autorisierungsserver SRV2 hinterlegt wurden.

Bei positivem Ergebnis der endgerätseitigen Prüfung des fahrzeugseitigen Berechtigungsnachweises JCRED1 anhand des endgerätseitig vorgehaltenen Berechtigungsnachweises JCRED2 erfolgt im Anschluss eine Übertragung einer positiven Prüfungsnachricht CHK vom mobilen Endgerät MD an die Steuerungsvorrichtung CTR.

Nach Empfang der positiven Prüfungsnachricht CHK seitens der Steuerungsvorrichtung CTR erfolgt eine Einrichtung einer Steuerverbindung mit dem mobilen Endgerät MD, welche eine Steuerung der Ladesäule CS durch das mobile Endgerät MD ermöglicht.

Im Zuge dieser Steuerverbindung kann beispielsweise eine Ladefreigabe, also ein Starten der elektrischen Energieübertragung zwischen Ladesäule CS und dem Fahrzeug EV durch Eingabe eines entsprechenden Kommandos an der am mobilen Endgerät MD zum Ablauf gebrachten Applikation erfolgen. In ähnlicher Weise wird der Ladevorgang durch Eingabe eines entsprechenden Kommandos am mobilen Endgerät MD angehalten oder beendet.

Ergänzend oder anstelle einer Administration eines der mit der Steuerungsvorrichtung CTR kommunikativ verbundenen Autorisierungsserver SRV1 kann auch ein mit dem mobilen Endgerät MD kommunikativ über eine - gestrichelt dargestellte - drahtlose Verbindung verbundener zweiter Autorisierungsserver SRV2 vorgesehen sein, an welchen die dem mobilen Endgerät zumindest teilweise vorliegenden Berechtigungsnachweise JCRED1,JCRED2 zur Identifizierung und Autorisierung des Ladesäulennutzers übertragen werden.

Außerdem kann dieser zweite Autorisierungsserver SRV2 oder auch beide Autorisierungsserver SRV1,SRV2 weitere Aufgaben wie eine Ermittlung sowie eine Verrechnung der an der Ladesäule CS entnommenen elektrischen Energie übernehmen.

In einer alternativen - zeichnerisch nicht dargestellten - Ausführungsform erfolgt nach Empfang des Teilbereichs des fahrzeugseitigen Berechtigungsnachweises JCRED1 am mobilen Endgerät MD keine endgerätseitige Prüfung beider Berechtigungsnachweise JCRED1,JCRD2. Stattdessen wird nach Empfang des fahrzeugseitigen Berechtigungsnachweises JCRED1 am mobilen Endgerät MD der endgerätseitige Berechtigungsnachweises JCRED2 an die Steuerungsvorrichtung CTR gesendet, wo die Prüfung beider Berechtigungsnachweise JCRED1, JCRED2 erfolgt. In dieser Ausführungsform wird also vom mobilen Endgerät MD keine Prüfungsnachricht CHK an die Steuerungsvorrichtung CTR versendet, sondern, ohne dass eine Prüfung im mobilen Endgerät stattfindet, der endgerätseitige Berechtigungsnachweises JCRED2. Die Prüfung findet dann in der Steuerungsvorrichtung CTR statt.

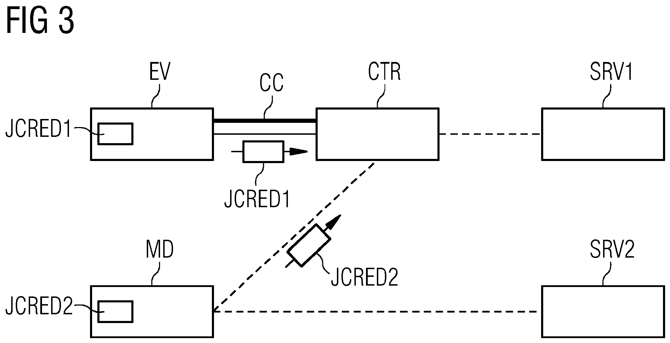

In Fig. 3 ist ein Ablaufbild zur Darstellung einer zweiten Ausführungsform des erfindungsgemäßen Verfahrens dargestellt. Gemäß dieser zweiten Ausführungsform des erfindungsgemäßen Verfahrens ist vorgesehen, dass ein endgerätseitiger Berechtigungsnachweis JCRED2 zuerst an die der Ladesäule CS zugeordnete Steuerungsvorrichtung CTR übergeben wird. Ein solches Verfahren wird erfindungsgemäß abgearbeitet, wenn der Ladesäulennutzer zunächst eine Nahfeldkommunikation NFC zwischen seinem mobilen Endgerät mit der Ladesäule aufbaut und erst im Anschluss das Ladekabel zwischen Ladesäule und Fahrzeug verbindet. In einer unmittelbaren Nachbarschaft mehrerer Ladesäulen CS wird bei Übergabe des endgerätseitiger Berechtigungsnachweis JCRED2 eine Steuerverbindung zu mehreren unbelegten, d.h. betriebs- und empfangsbereiten Ladesäulen CS aufgebaut und gewissermaßen mehrere potentielle Steuerverbindungen zu mobilen Endgerät MD bereitgestellt. Erst durch Verbindung des Ladekabels CC wird eine ein-eindeutige Zuordnung zwischen Ladesäule CS und Fahrzeug EV hergestellt. Alle anderen nicht innerhalb eines definierbaren Zeitraums zugordneten Ladesäulen CS beenden die Steuerverbindung in Folge eines Timeouts, alternativ oder zusätzlich auch durch eine aktive Anweisung durch das mobile Endgerät MD.

Hierzu ist über die seitens der Steuerungsvorrichtung CTR eine Nahfeldkommunikationsschnittstelle NFC ausgebildet, über die der Ladesäulennutzer eine Übertragung zumindest eines Teilbereiches seines endgerätseitig vorgehaltenen Berechtigungsnachweis JCRED2 veranlassen kann. Dieser endgerätseitige Berechtigungsnachweis JCRED2 wird von der Steuerungsvorrichtung CTR empfangen und vorübergehend gespeichert.

Mit einer darauf folgenden Verbindung des Ladekabels CC zwischen der Ladesäule CS und dem Fahrzeug EV wird über eine - in der Zeichnung parallel zum dicker gezeichneten Ladekabel CC dargestellte - Datenverbindung zwischen dem Fahrzeug EV und der Steuerungsvorrichtung CTR der im Fahrzeug EV vorgehaltene fahrzeugseitige Berechtigungsnachweises JCRED1 an die Steuerungsvorrichtung CTR übertragen.

Die Steuerungsvorrichtung CTR verarbeitet die empfangene fahrzeugseitige Berechtigungsnachweises JCRED1 dahingehend, dass eine Prüfung des fahrzeugseitigen Berechtigungsnachweises JCRED1 anhand des zwischengespeicherten endgerätseitigen Berechtigungsnachweises JCRED2 - oder zumindest Teilbereiche davon - erfolgt. Bei dieser Prüfung wird optional der Autorisierungsserver SRV1 beteiligt.

Bei einem positiven Ergebnis dieser Prüfung erfolgt eine Zuordnung der Ladesäule CS zum Fahrzeug EV und zum mobilen Endgerät des Ladesäulennutzers, welche eine Steuerung der Ladesäule CS durch das mobile Endgerät MD ermöglicht. Im Zuge dieser Steuerung kann beispielsweise eine Ladefreigabe, also ein Starten der elektrischen Energieübertragung zwischen Ladesäule CS und dem Fahrzeug EV durch Eingabe eines entsprechenden Kommandos an der am mobilen Endgerät MD zum Ablauf gebrachten Applikation erfolgen. In ähnlicher Weise wird der Ladevorgang durch Eingabe eines entsprechenden Kommandos am mobilen Endgerät MD angehalten.

Ein besonderer Vorteil des erfindungsgemäßen Verfahrens zeigt sich insbesondere in dieser Ausführungsform darin, dass der Ladesäulennutzer keine Ladesäule CS - etwa durch Eingabe einer Ladesäulennummer in das mobile Endgerät oder durch Auswahl aus einer Liste - auswählen muss, um eine eindeutige Zuordnung einer Ladesäulen CS aus einer Mehrzahl in unmittelbarer Nachbarschaft verfügbarer Ladesäulen vorzunehmen. In einer unmittelbaren Nachbarschaft mehrerer Ladesäulen CS wird bei Aufbau der Nahfeldkommunikation NFC seitens des mobilen Endgerät MD eine Steuerverbindung zu mehreren unbelegten, d.h. betriebs- und empfangsbereiten Ladesäulen aufgebaut und gewissermaßen mehrere potentielle Steuerverbindungen bereitgestellt. Erst durch Verbindung des Ladekabels CC wird eine ein-eindeutige Zuordnung zwischen Ladesäule CS und Fahrzeug EV hergestellt. Alle anderen nicht innerhalb eines definierbaren Zeitraums zugordneten Ladesäulen CS beenden die Steuerverbindung in Folge eines Timeouts und/oder durch das mobile Endgerät MD.

In einer alternativen - zeichnerisch nicht dargestellten - Ausführungsform erfolgt nach Empfang des endgerätseitigen Berechtigungsnachweises JCRED2 an der Steuerungsvorrichtung CTR keine Prüfung beider Berechtigungsnachweise JCRED1, JCRED2 in der Steuerungsvorrichtung CTR selbst. Stattdessen wird nach Empfang des endgerätseitigen Berechtigungsnachweises JCRED2 an der Steuerungsvorrichtung CTR abgewartet, bis der fahrzeugseitige Berechtigungsnachweises JCRED1 an der Steuerungsvorrichtung CTR - also üblicherweise nach Verbindung des Fahrzeugs EV mit dem Ladekabel CC, wobei auch eine kommunikative Verbindung eingerichtet wird - vorliegt. Der fahrzeugseitige Berechtigungsnachweis JCRED1 wird dann ohne Prüfung durch die Steuerungsvorrichtung an das mobile Endgerät MD gesendet, wo die Prüfung beider Berechtigungsnachweise JCRED1, JCRED2 erfolgt. Bei positivem Ergebnis der endgerätseitigen Prüfung des fahrzeugseitigen Berechtigungsnachweises JCRED1 anhand des endgerätseitig vorgehaltenen Berechtigungsnachweises JCRED2 erfolgt im Anschluss eine Übertragung einer positiven Prüfungsnachricht CHK vom mobilen Endgerät MD an die Steuerungsvorrichtung CTR.

Gemäß einer vorteilhaften Fortbildung der Erfindung ist vorgesehen, eine Media Access Control-Adresse bzw. MAC-Adresse des Fahrzeugs als Bestandteil des Berechtigungsnachweises JCRED1 und/oder auch des endgerätseitigen Berechtigungsnachweises JCRED2 vorzusehen. Diese Maßnahme ist insbesondere vorteilhaft, da die MAC-Adresse des Fahrzeugs schon derzeit für eine Kommunikation zwischen dem vom Fahrzeug und einer Ladesäule verwendet wird.

Zum Schutz vor Manipulationen gegenüber bösgläubigen Ladesäulennutzern oder auch gegenüber bösgläubigen Ladesäulenbetreibern kann in verschiedenen Fortbildungen der Erfindung eine kryptographische Sicherung der Datenkommunikation sowie eine zertifikatbasierte Überprüfung der Berechtigungsnachweise JCRED1; JCRED2 erfolgen.

Gemäß einer vorteilhaften Fortbildung der Erfindung ist vorgesehen, die Nahfeldkommunikationsverbindung NFC zwischen der Steuerungsvorrichtung CTR und dem mobilen Endgerät MD kryptographisch zu sichern. Eine Sicherung erfolgt vorzugsweise unter Beteiligung eines digitalen Zertifikats, zur kryptographisch gesicherten Bestätigung von Eigenschaften, insbesondere eines Public-Key-Zertifikat zur Bestätigung öffentlicher Schlüssel.

In einer Ausführungsform ist eine Beteiligung eines vorläufig verifizierten digitalen Zertifikats vorgesehen. Gemäß dieser Ausführungsform ist ein Senden eines vorläufig verifizierten digitalen Zertifikates des mobilen Endgeräts MD oder einer daraus extrahierten Prüfinformation vom mobilen Endgerät MD über die aufgebaute Nahfeldkommunikationsverbindung NFC zur Steuerungsvorrichtung CTR vorgesehen, anhand welcher die Steuerungsvorrichtung CTR, optional in Zusammenarbeit mit dem Autorisierungsserver SRV1 eine Autorisierungsprüfung des mobilen Endgerät MD durchführt. Anschließend wird ein Ergebnis dieser Prüfung vom Autorisierungsserver SRV1 zur Steuerungsvorrichtung CTR, welche in Abhängigkeit des empfangenen Autorisierungsprüfergebnisses eine Steuerung der Ladesäule CS durch das mobile Endgerät MD freigibt oder nicht.

Je nach Implementierung ist das vorläufig verifizierte digitale Zertifikat entweder Bestandteil des endgerätseitigen Berechtigungsnachweises JCRED2 oder der endgerätseitigen Berechtigungsnachweises JCRED2 ist Bestandteil des vorläufig verifizierten digitalen Zertifikats. Dies gilt in gleicher Weise für den fahrzeugseitigen Berechtigungsnachweises JCRED1.

Bei einer Ausführungsform des erfindungsgemäßen Verfahrens wird die Nahfeldkommunikationsverbindung NFC mittels eines Protokolls zur Verschlüsselung von Datenübertragungen kryptographisch geschützt, beispielsweise mittels Transport Layer Security bzw. TLS, Secure Sockets Layer bzw. SSL oder Internet Protocol Security bzw. IPsec.

Bei einer vorteilhaften Fortbildung der Erfindung werden auch die Kommunikationsverbindungen zwischen der Steuerungsvorrichtung CTR und dem Autorisierungsserver SRV1, zwischen der Steuerungsvorrichtung CTR und dem Fahrzeug EV, zwischen dem mobilen Endgerät und dem Autorisierungsserver SRV2 jeweils oder insgesamt kryptographisch gesichert.

Bei einer Ausführungsform weist das Ergebnis der Prüfung Laderegeln zur Steuerung des Ladevorganges durch die Ladesäule CS auf. Alternativ zu den Laderegeln selbst können auch Steuerdaten bzw. Steuersignale zur Aktivierung derartiger Laderegeln durch eine - nicht dargestellte - fahrzeuginterne Steuerungsvorrichtung des Fahrzeugs EV von der Steuerungsvorrichtung CTR oder vom Autorisierungsserver SRV1 über die Steuerungsvorrichtung CTR Autorisierungsserver zur fahrzeuginternen Steuerungsvorrichtung übertragen werden. Diese Laderegeln können sich ebenfalls in einem Datenspeicher der fahrzeuginternen Steuerungsvorrichtung des Fahrzeuges EV befinden, auf den die Steuerungsvorrichtung CTR der Ladesäule CS über die fahrzeugseitige Schnittstelle IFC Zugriff hat.

Die erfindungsgemäße Steuerungsvorrichtung CTR stellt neben einer Zuordnung einer Ladesäule CS zu einem zu ladenden Fahrzeug auch einer Zuordnung einer Steuerverbindung mit einem mobilen Endgerät MD eines Ladesäulennutzers her. Dabei wird eine Steuerverbindung über eine Nahfeldkommunikationsschnittstelle NFC mit dem mobilen Endgerät MD nach Empfang mindestens eines Berechtigungsnachweises eines fahrzeugseitigen und endgerätseitigen Berechtigungsnachweispaares JCRED1, JCRED2 ausgebildet. Eine nach Ausbildung der Steuerverbindung folgende Zuordnung der Ladesäule CS erfolgt durch eine Zusammenwirkung der mit der Nahfeldkommunikationsschnittstelle NFC ausgebildeten Steuerverbindung und dem fahrzeugseitigen Berechtigungsnachweises JCRED1. Eine Verwendung einer Nahfeldkommunikationsschnittstelle NFC gewährleistet in vorteilhafter Weise Unabhängigkeit von einer Mobilfunknetzabdeckung.

## Patentansprüche

1. Steuerungsvorrichtung, zugeordnet einer Ladesäule (CS) zum Laden eines Fahrzeugs (EV), die Steuerungsvorrichtung (CTR) umfassend:
- eine Schnittstelle (IFC) zum Fahrzeug (EV), eingerichtet zum Empfang eines fahrzeugseitigen Berechtigungsnachweises (JCRED1);
- eine Nahfeldkommunikationsschnittstelle (IFM), eingerichtet zum Austausch eines endgerätseitigen Berechtigungsnachweises (JCRED2) mit einem mobilen Endgerät (MD) ;
- eine Zuordnungseinheit (AS) zur Einrichtung einer Steuerverbindung mit dem mobilen Endgerät (MD) über die Nahfeldkommunikationsschnittstelle (IFM) nach Empfang des fahrzeugseitigen oder des endgerätseitigen Berechtigungsnachweises (JCRED1;JCRED2) und zur Zuordnung der Ladesäule (CS) zum Fahrzeug (EV) nach Empfang und positiver Prüfung beider Berechtigungsnachweise (JCRED1; JCRED2) .

2. Steuerungsvorrichtung, zugeordnet einer Ladesäule (CS) zum Laden eines Fahrzeugs (EV), die Steuerungsvorrichtung (CTR) umfassend:
- eine Schnittstelle (IFC) zum Fahrzeug (EV), eingerichtet zum Empfang eines fahrzeugseitigen Berechtigungsnachweises (JCRED1);
- eine Nahfeldkommunikationsschnittstelle (IFM), eingerichtet zum Austausch zumindest eines Berechtigungsnachweises (JCRED1;JCRED2) umfassend den fahrzeugseitigen Berechtigungsnachweis (JCRED1) mit einem mobilen Endgerät (MD);
- eine Zuordnungseinheit (AS) zur Einrichtung einer Steuerverbindung mit dem mobilen Endgerät (MD) über die Nahfeldkommunikationsschnittstelle (IFM) nach Empfang des fahrzeugseitigen Berechtigungsnachweises (JCRED1) oder nach Empfang eines endgerätseitigen Berechtigungsnachweises (JCRED2) über die Nahfeldkommunikationsschnittstelle (IFM) und zur Zuordnung der Ladesäule (CS) zum Fahrzeug (EV) nach Empfang einer positiven Prüfungsnachricht (CHK) auf Basis einer positiven Prüfung des fahrzeugseitigen Berechtigungsnachweises (JCRED1) und des endgerätseitigen Berechtigungsnachweises (JCRED2) durch das mobile Endgerät (MD).

3. Steuerungsvorrichtung gemäß einem der vorgenannten Patentansprüche 1 bis 2, **gekennzeichnet durch** eine Ausgestaltung der Nahfeldkommunikationsschnittstelle (IFM) zum Betrieb eines lokalen Funknetzes gemäß einem Kommunikationsstand der Standard-Familie IEEE 802.11.

4. Steuerungsvorrichtung gemäß einem der vorgenannten Patentansprüche 1 bis 2, **gekennzeichnet durch** eine Ausgestaltung der Nahfeldkommunikationsschnittstelle (IFM) zum Betrieb eines lokalen Funknetzes gemäß einem Kommunikationsstand IEEE 802.15.1.

5. Steuerungsvorrichtung gemäß einem der vorgenannten Patentansprüche 1 bis 2, **gekennzeichnet durch** eine Ausgestaltung der Nahfeldkommunikationsschnittstelle (IFM) zum Betrieb eines lokalen Funknetzes gemäß Bluetooth Spezifikation 4.2 und/oder Weiterentwicklungen gemäß Bluetooth Low Energy Spezifikationen.

6. Steuerungsvorrichtung gemäß einem der vorgenannten Patentansprüche 1 bis 2, **gekennzeichnet durch** eine Ausgestaltung der Nahfeldkommunikationsschnittstelle (IFM) zum kontaktlosen Datenaustausch per elektromagnetischer Induktion mittels loser gekoppelter Spulen.

7. Verfahren zur Steuerung einer Ladesäule, die Ladesäule (CS) eingerichtet zum Laden eines Fahrzeugs (EV), umfassend folgende Schritte:
a) Empfang zumindest eines Teilbereiches eines fahrzeugseitigen Berechtigungsnachweises (JCRED1) von einer der Ladesäule (CC) zugeordneten Steuerungsvorrichtung (CTR);
b) Senden, durch die Steuerungsvorrichtung (CTR), zumindest des Teilbereiches des fahrzeugseitigen Berechtigungsnachweises (JCRED1) über eine Nahfeldkommunikationsverbindung (NFC);
c) Empfang zumindest des Teilbereiches des fahrzeugseitigen Berechtigungsnachweises (JCRED1) durch ein mobiles Endgerät (MD);
d) Einrichtung einer Steuerverbindung zwischen dem mobilen Endgerät (MD) mit der Steuerungsvorrichtung (CTR) über die Nahfeldkommunikationsschnittstelle (IFM) nach Empfang zumindest des Teilbereiches des fahrzeugseitigen Berechtigungsnachweises (JCRED1);
wobei nach Einrichtung der Steuerverbindung folgende Schritte durchgeführt werden:
e) Senden des endgerätseitigen Berechtigungsnachweis (JCRED2) über die Nahfeldkommunikationsverbindung (NFC) an die Steuerungsvorrichtung (CTR);
f) Empfang des endgerätseitigen Berechtigungsnachweis (JCRED2) an der Steuerungsvorrichtung (CTR) und Prüfung zumindest des Teilbereiches des fahrzeugseitigen Berechtigungsnachweises (JCRED1) anhand zumindest des Teilbereiches des endgerätseitigen Berechtigungsnachweises (JCRED2) seitens der Steuerungsvorrichtung (CTR); und
g) Bei positivem Ergebnis der Prüfung, Zuordnung der Ladesäule (CS) zum Fahrzeug (EV).

8. Verfahren zur Steuerung einer Ladesäule, die Ladesäule (CS) eingerichtet zum Laden eines Fahrzeugs (EV), umfassend folgende Schritte:
a) Empfang zumindest eines Teilbereiches eines fahrzeugseitigen Berechtigungsnachweises (JCRED1) von einer der Ladesäule (CC) zugeordneten Steuerungsvorrichtung (CTR);
b) Senden, durch die Steuerungsvorrichtung (CTR), zumindest des Teilbereiches des fahrzeugseitigen Berechtigungsnachweises (JCRED1) über eine Nahfeldkommunikationsverbindung (NFC);
c) Empfang zumindest des Teilbereiches des fahrzeugseitigen Berechtigungsnachweises (JCRED1) durch ein mobiles Endgerät (MD);
d) Einrichtung einer Steuerverbindung zwischen dem mobilen Endgerät (MD) mit der Steuerungsvorrichtung (CTR) über die Nahfeldkommunikationsschnittstelle (IFM) nach Empfang zumindest des Teilbereiches des fahrzeugseitigen Berechtigungsnachweises (JCRED1);
wobei nach Einrichtung der Steuerverbindung folgende Schritte durchgeführt werden:
e) endgerätseitige Prüfung zumindest des Teilbereiches des fahrzeugseitigen Berechtigungsnachweises (JCRED1) anhand des endgerätseitigen Berechtigungsnachweises (JCRED2);
f) Bei positivem Ergebnis der endgerätseitigen Prüfung, Senden einer positiven Prüfungsnachricht (CHK) vom mobilen Endgerät (MD) an die Steuerungsvorrichtung (CTR); und
g) Zuordnung der Ladesäule (CS) zum Fahrzeug (EV) nach Empfang der positiven Prüfungsnachricht (CHK) durch die Steuerungsvorrichtung (CTR).

9. Verfahren zur Steuerung einer Ladesäule, die Ladesäule (CS) eingerichtet zum Laden eines Fahrzeugs (EV), umfassend folgende Schritte:
a) Empfang zumindest eines Teilbereiches eines von einem mobilen Endgerät (MD) über eine Nahfeldkommunikationsverbindung (NFC) gesendeten endgerätseitigen Berechtigungsnachweis (JCRED2) von einer der Ladesäule (CS) zugeordneten Steuerungsvorrichtung (CTR);
b) Empfang zumindest eines Teilbereiches eines fahrzeugseitigen Berechtigungsnachweises (JCRED1) von der Steuerungsvorrichtung (CTR);
c) Einrichtung einer Steuerverbindung zwischen der Steuerungsvorrichtung (CTR) und dem mobilen Endgerät (MD) über die Nahfeldkommunikationsschnittstelle (IFM) nach Empfang des endgerätseitigen Berechtigungsnachweises (JCRED2) ;
wobei nach Einrichtung der Steuerverbindung folgende Schritte durchgeführt werden:
d) Prüfung, seitens der Steuerungsvorrichtung (CTR), zumindest des Teilbereiches des fahrzeugseitigen Berechtigungsnachweises (JCRED1) anhand zumindest des Teilbereiches des endgerätseitigen Berechtigungsnachweis (JCRED2) ;
e) Bei positivem Ergebnis der Prüfung, Zuordnung der Ladesäule (CS) zum Fahrzeug (EV).

10. Verfahren zur Steuerung einer Ladesäule, die Ladesäule (CS) eingerichtet zum Laden eines Fahrzeugs (EV), umfassend folgende Schritte:
a) Empfang zumindest eines Teilbereiches eines von einem mobilen Endgerät (MD) über eine Nahfeldkommunikationsverbindung (NFC) gesendeten endgerätseitigen Berechtigungsnachweis (JCRED2) von einer der Ladesäule (CS) zugeordneten Steuerungsvorrichtung (CTR);
b) Empfang zumindest eines Teilbereiches eines fahrzeugseitigen Berechtigungsnachweises (JCRED1) von der Steuerungsvorrichtung (CTR);
c) Einrichtung einer Steuerverbindung zwischen der Steuerungsvorrichtung (CTR) und dem mobilen Endgerät (MD) über die Nahfeldkommunikationsschnittstelle (IFM) nach Empfang des endgerätseitigen Berechtigungsnachweises (JCRED2) ;
wobei nach Einrichtung der Steuerverbindung folgende Schritte durchgeführt werden:
d) Senden, durch die Steuerungsvorrichtung (CTR), zumindest eines Teilbereiches des fahrzeugseitigen Berechtigungsnachweises (JCRED1) über die Nahfeldkommunikationsverbindung (NFC) an das mobile Endgerät (MD);
f) Empfang zumindest des Teilbereiches des fahrzeugseitigen Berechtigungsnachweis (JCRED1) vom mobilen Endgerät (MD) und endgerätseitige Prüfung zumindest des Teilbereiches des fahrzeugseitigen Berechtigungsnachweises (JCRED1) anhand zumindest des Teilbereiches des endgerätseitigen Berechtigungsnachweis (JCRED2);
g) Bei positivem Ergebnis der endgerätseitigen Prüfung, Senden einer positiven Prüfungsnachricht (CHK) vom mobilen Endgerät (MD) an die Steuerungsvorrichtung (CTR); und
h) Zuordnung der Ladesäule (CS) zum Fahrzeug (EV) nach Empfang der positiven Prüfungsnachricht (CHK) durch die Steuerungsvorrichtung (CTR).

11. Verfahren gemäß einer der vorgenannten Patentansprüche 7 bis 10, **dadurch gekennzeichnet, dass** die Prüfung mindestens eines Berechtigungsnachweises (JCRED1, JCRED2) oder eines Teilbereiches davon zumindest teilweise in Zusammenarbeit mit mindestens einem Autorisierungsserver (SRV1,SRV2) erfolgt.

12. Verfahren gemäß einer der vorgenannten Patentansprüche 7 bis 11 **dadurch gekennzeichnet, dass** über die Nahfeldkommunikationsverbindung (NFC) eine kryptographisch gesicherte Datenverbindung eingerichtet wird.

13. Verfahren gemäß einer der vorgenannten Patentansprüche 7 bis 12, **dadurch gekennzeichnet, dass** der endgerätseitige Berechtigungsnachweis (JCRED2) und/oder der fahrzeugseitige Berechtigungsnachweis (JCRED1) ein digitales Zertifikat enthält.

14. Verfahren gemäß einer der vorgenannten Patentansprüche 7 bis 12, **dadurch gekennzeichnet, dass** der endgerätseitige Berechtigungsnachweis (JCRED2) und/oder der fahrzeugseitige Berechtigungsnachweis (JCRED1) Bestandteil eines digitalen Zertifikats ist.

15. Verfahren gemäß einer der vorgenannten Patentansprüche 7 bis 14, **dadurch gekennzeichnet, dass** eine MAC-Adresse des Fahrzeugs (EV) Bestandteil des fahrzeugseitigen Berechtigungsnachweises (JCRED1) und/oder des endgerätseitigen Berechtigungsnachweis (JCRED2) ist.

## Claims

1. A control device allocated to a charging station (CS) for charging a vehicle (EV), wherein the control device (CTR) comprises:
- an interface (IFC) to the vehicle (EV), configured to receive a vehicle-side proof of authorization (JCRED1);
- a near-field communication interface (IFM), configured for exchanging a terminal-side proof of authorization (JCRED2) with a mobile terminal device (MD);
- an allocation unit (AS) for establishing a control link with the mobile terminal device (MD) via the near-field communication interface (IFM) after receiving the vehicle-side or the terminal-side proof of authorization (JCRED1; JCRED2) and for allocating the charging station (CS) to the vehicle (EV) after receipt and positive verification of both proofs of authorization (JCRED1;JCRED2) .

2. A control device allocated to a charging station (CS) for charging a vehicle (EV), wherein the control device (CTR) comprises:
- an interface (IFC) to the vehicle (EV), configured to receive a vehicle-side proof of authorization (JCRED1);
- a near-field communication interface (IFM), configured for exchanging at least one proof of authorization (JCRED1;JCRED2) comprising the vehicle-side proof of authorization (JCRED1) with a mobile terminal device (MD);
- an allocation unit (AS) for establishing a control link with the mobile terminal device (MD) via the near-field communication interface (IFM) after receiving the vehicle-side proof of authorization (JCRED1) or after receiving a terminal-side proof of authorization (JCRED2) via the near-field communication interface (IFM) and for allocating the charging station (CS) to the vehicle (EV) after receiving a positive verification message (CHK) based on a positive verification of the vehicle-side proof of authorization (JCRED1) and the terminal-side proof of authorization (JCRED2) by the mobile terminal (MD) .

3. The control device according to one of the preceding claims 1 to 2, **characterized by** a configuration of the near-field communication interface (IFM) for operating a local radio network according to a communication standard of the standard family IEEE 802.11.

4. The control device according to one of the preceding claims 1 to 2, **characterized by** a configuration of the near-field communication interface (IFM) for operating a local radio network according to a communication standard IEEE 802.15.1.

5. The control device according to one of the preceding claims 1 to 2, **characterized by** a configuration of the near-field communication interface (IFM) for operating a local radio network according to Bluetooth specification 4.2 and/or further developments according to Bluetooth Low Energy specifications.

6. The control device according to one of the preceding claims 1 to 2, **characterized by** a configuration of the near-field communication interface (IFM) for contactless data exchange by electromagnetic induction by means of loosely coupled coils.

7. A method for controlling a charging station, the charging station (CS) being configured for charging a vehicle (EV), comprising the following steps:
a) receiving at least a portion of a vehicle-side proof of authorization (JCRED1) by a control device (CTR) allocated to the charging station (CC);
b) transmitting, by the control device (CTR), at least the portion of the vehicle-side proof of authorization (JCRED1) via a near-field communication link (NFC);
c) receiving at least the portion of the vehicle-side proof of authorization (JCRED1) by a mobile terminal device (MD) ;
d) establishing a control link between the mobile terminal device (MD) and the control device (CTR) via the near-field communication interface (IFM) after receipt of at least the portion of the vehicle-side proof of authorization (JCRED1);
wherein the following steps are carried out after establishing the control link:
e) transmitting the terminal-side proof of authorization (JCRED2) via the near field communication link (NFC) to the control device (CTR);
f) receiving the terminal-side proof of authorization (JCRED2) at the control device (CTR) and verifying at least the portion of the vehicle-side proof of authorization (JCRED1) by means of at least the portion of the terminal-side proof of authorization (JCRED2) by the control device (CTR); and
g) in case of a positive result of the verification, allocating the charging station (CS) to the vehicle (EV).

8. A method for controlling a charging station, the charging station (CS) being configured for charging a vehicle (EV), comprising the following steps:
a) receiving at least a portion of a vehicle-side proof of authorization (JCRED1) by a control device (CTR) allocated to the charging station (CC);
b) transmitting, by the control device (CTR), at least the portion of the vehicle-side proof of authorization (JCRED1) via a near-field communication link (NFC);
c) receiving at least the portion of the vehicle-side proof of authorization (JCRED1) by a mobile terminal device (MD) ;
d) establishing a control link between the mobile terminal device (MD) and the control device (CTR) via the near-field communication interface (IFM) after receipt of at least the portion of the vehicle-side proof of authorization (JCRED1);
wherein the following steps are carried out after establishing the control link:
e) terminal-side verification of at least the portion of the vehicle-side proof of authorization (JCRED1) by means of the terminal-side proof of authorization (JCRED2) ;
f) in case of a positive result of the terminal-side verification, transmitting a positive verification message (CHK) from the mobile terminal device (MD) to the control device (CTR); and
g) allocating the charging station (CS) to the vehicle (EV) after receipt of the positive verification message (CHK) by the control device (CTR).

9. A method for controlling a charging station, the charging station (CS) being configured for charging a vehicle (EV), comprising the following steps:
a) receiving, by a control device (CTR) allocated to the charging station (CS), at least a portion of a terminal-side proof of authorization (JCRED2) transmitted from a mobile terminal device (MD) via a near-field communication link (NFC);
b) receiving at least a portion of a vehicle-side proof of authorization (JCRED1) from the control device (CTR);
c) establishing a control link between the control device (CTR) and the mobile terminal device (MD) via the near-field communication interface (IFM) after receipt of the terminal-side proof of authorization (JCRED2);
wherein the following steps are carried out after establishing the control link:
d) verifying, by the control device (CTR), at least the portion of the vehicle-side proof of authorization (JCRED1) by means of at least the portion of the terminal-side proof of authorization (JCRED2);
e) in case of a positive result of the verification, allocating the charging station (CS) to the vehicle (EV).

10. A method for controlling a charging station, the charging station (CS) being configured for charging a vehicle (EV), comprising the following steps:
a) receiving, by a control device (CTR) allocated to the charging station (CS), at least a portion of a terminal-side proof of authorization (JCRED2) transmitted from a mobile terminal device (MD) via a near-field communication link (NFC);
b) receiving at least a portion of a vehicle-side proof of authorization (JCRED1) from the control device (CTR);
c) establishing a control link between the control device (CTR) and the mobile terminal device (MD) via the near-field communication interface (IFM) after receipt of the terminal-side proof of authorization (JCRED2);
wherein the following steps are carried out after establishing the control link:
d) transmitting, by the control device (CTR), at least a portion of the vehicle-side proof of authorization (JCRED1) via the near-field communication link (NFC) to the mobile terminal device (MD);
f) receiving at least the portion of the vehicle-side proof of authorization (JCRED1) by the mobile terminal device (MD) and verifying on the terminal side at least the portion of the vehicle-side proof of authorization (JCRED1) by means of at least the portion of the terminal-side proof of authorization (JCRED2);
g) in case of a positive result of the terminal-side verification, transmitting a positive verification message (CHK) from the mobile terminal device (MD) to the control device (CTR); and
h) allocating the charging station (CS) to the vehicle (EV) after receipt of the positive verification message (CHK) by the control device (CTR).

11. The method according to one of the preceding claims 7 to 10, **characterized in that** the verification of at least one proof of authorization (JCRED1, JCRED2) or of a portion thereof is carried out at least partially in cooperation with at least one authorization server (SRV1, SRV2).

12. The method according to one of the preceding claims 7 to 11, **characterized in that** a cryptographically protected data link is established via the near-field communication link (NFC).

13. The method according to one of the preceding claims 7 to 12, **characterized in that** the terminal-side proof of authorization (JCRED2) and/or the vehicle-side proof of authorization (JCRED1) contains a digital certificate.

14. The method according to one of the preceding claims 7 to 12, **characterized in that** the terminal-side proof of authorization (JCRED2) and/or the vehicle-side proof of authorization (JCRED1) is part of a digital certificate.

15. The method according to one of the preceding claims 7 to 14, **characterized in that** a MAC address of the vehicle (EV) is part of the vehicle-side proof of authorization (JCRED1) and/or of the terminal-side proof of authorization (JCRED2).

## Revendications

1. Dispositif de commande, associé à une colonne de charge (CS) pour le chargement d'un véhicule (EV), le dispositif de commande (CTR) comprenant :
- une interface (IFC) vers le véhicule (EV), configurée pour la réception d'une accréditation côté véhicule (JCRED1) ;
- une interface de communication en champ proche (IFM), configurée pour l'échange d'une accréditation côté terminal (JCRED2) avec un terminal mobile (MD) ;
- un module d'association (AS) pour la configuration d'une connexion de commande au terminal mobile (MD) par le biais de l'interface de communication en champ proche (IFM) après réception de l'accréditation côté véhicule ou côté terminal (JCRED1 ; JCRED2) et pour l'association de la colonne de charge (CS) au véhicule (EV) après réception et contrôle positif des deux accréditations (JCRED1 ; JCRED2).

2. Dispositif de commande, associé à une colonne de charge (CS) pour le chargement d'un véhicule (EV), le dispositif de commande (CTR) comprenant :
- une interface (IFC) vers le véhicule (EV), configurée pour la réception d'une accréditation côté véhicule (JCRED1) ;
- une interface de communication en champ proche (IFM), configurée pour l'échange d'au moins une accréditation (JCRED1 ; JCRED2) comprenant l'accréditation côté véhicule (JCRED1) avec un terminal mobile (MD) ;
- un module d'association (AS) pour la configuration d'une connexion de commande au terminal mobile (MD) par le biais de l'interface de communication en champ proche (IFM) après réception de l'accréditation côté véhicule (JCRED1) ou après réception d'une accréditation côté terminal (JCRED2) par le biais de l'interface de communication en champ proche (IFM) et pour l'association de la colonne de charge (CS) au véhicule (EV) après réception d'un message de contrôle positif (CHK) sur la base d'un contrôle positif de l'accréditation côté véhicule (JCRED1) et de l'accréditation côté terminal (JCRED2) par le terminal mobile (MD).

3. Dispositif de commande selon une des revendications précédentes 1 à 2, **caractérisé par** une mise en œuvre de l'interface de communication en champ proche (IFM) pour l'exploitation d'un réseau radio local conformément à un niveau de communication de la famille de normes IEEE 802.11.

4. Dispositif de commande selon une des revendications précédentes 1 à 2, **caractérisé par** une mise en œuvre de l'interface de communication en champ proche (IFM) pour l'exploitation d'un réseau radio local conformément à un niveau de communication IEEE 802.15.1.

5. Dispositif de commande selon une des revendications précédentes 1 à 2, **caractérisé par** une mise en œuvre de l'interface de communication en champ proche (IFM) pour l'exploitation d'un réseau radio local conformément à la spécification Bluetooth 4.2 et/ou des développements conformément à des spécifications Bluetooth Low Energy.

6. Dispositif de commande selon une des revendications précédentes 1 à 2, **caractérisé par** une mise en œuvre de l'interface de communication en champ proche (IFM) pour l'échange de données sans contact par induction électromagnétique au moyen de bobines couplées détachées.

7. Procédé de commande d'une colonne de charge, la colonne de charge (CS) étant configurée pour le chargement d'un véhicule (EV), comprenant les étapes suivantes :
a) réception d'au moins une région partielle d'une accréditation côté véhicule (JCRED1) par un dispositif de commande (CTR) associé à la colonne de charge (CS) ;
b) envoi, par le dispositif de commande (CTR), d'au moins la région partielle de l'accréditation côté véhicule (JCRED1) par le biais d'une connexion de communication en champ proche (NFC) ;
c) réception d'au moins la région partielle de l'accréditation côté véhicule (JCRED1) par un terminal mobile (MD) ;
d) configuration d'une connexion de commande entre le terminal mobile (MD) et le dispositif de commande (CTR) par le biais de l'interface de communication en champ proche (IFM) après réception d'au moins la région partielle de l'accréditation côté véhicule (JCRED1) ;
dans lequel après configuration de la connexion de commande, les étapes suivantes sont réalisées :
e) envoi de l'accréditation côté terminal (JCRED2) par le biais de la connexion de communication en champ proche (NFC) au dispositif de commande (CTR) ;
f) réception de l'accréditation côté terminal (JCRED2) au niveau du dispositif de commande (CTR) et contrôle d'au moins la région partielle de l'accréditation côté véhicule (JCRED1) à l'aide d'au moins la région partielle de l'accréditation côté terminal (JCRED2) du côté du dispositif de commande (CTR) ; et
g) en cas de résultat positif du contrôle, association de la colonne de charge (CS) au véhicule (EV).

8. Procédé de commande d'une colonne de charge, la colonne de charge (CS) étant configurée pour le chargement d'un véhicule (EV), comprenant les étapes suivantes :
a) réception d'au moins une région partielle d'une accréditation côté véhicule (JCRED1) par un dispositif de commande (CTR) associé à la colonne de charge (CS) ;
b) envoi, par le dispositif de commande (CTR), d'au moins la région partielle de l'accréditation côté véhicule (JCRED1) par le biais d'une connexion de communication en champ proche (NFC) ;
c) réception d'au moins la région partielle de l'accréditation côté véhicule (JCRED1) par un terminal mobile (MD) ;
d) configuration d'une connexion de commande entre le terminal mobile (MD) et le dispositif de commande (CTR) par le biais de l'interface de communication en champ proche (IFM) après réception d'au moins la région partielle de l'accréditation côté véhicule (JCRED1) ;
dans lequel après configuration de la connexion de commande, les étapes suivantes sont réalisées :
e) contrôle côté terminal d'au moins la région partielle de l'accréditation côté véhicule (JCRED1) à l'aide de l'accréditation côté terminal (JCRED2) ;
f) en cas de résultat positif du contrôle côté terminal, envoi d'un message de contrôle positif (CHK) du terminal mobile (MD) au dispositif de commande (CTR) ; et
g) association de la colonne de charge (CS) au véhicule (EV) après réception du message de contrôle positif (CHK) par le dispositif de commande (CTR).

9. Procédé de commande d'une colonne de charge, la colonne de charge (CS) étant configurée pour le chargement d'un véhicule (EV), comprenant les étapes suivantes :
a) réception d'au moins une région partielle d'une accréditation côté terminal (JCRED2) envoyée par un terminal mobile (MD) par le biais d'une connexion de communication en champ proche (NFC) par un dispositif de commande (CTR) associé à la colonne de charge (CS) ;
b) réception d'au moins une région partielle d'une accréditation côté véhicule (JCRED1) par le dispositif de commande (CTR) ;
c) configuration d'une connexion de commande entre le dispositif de commande (CTR) et le terminal mobile (MD) par le biais de l'interface de communication en champ proche (IFM) après réception de l'accréditation côté terminal (JCRED2) ;
dans lequel après configuration de la connexion de commande, les étapes suivantes sont réalisées :
d) contrôle, du côté du dispositif de commande (CTR), d'au moins la région partielle de l'accréditation côté véhicule (JCRED1) à l'aide d'au moins la région partielle de l'accréditation côté terminal (JCRED2) ;
e) en cas de résultat positif du contrôle, association de la colonne de charge (CS) au véhicule (EV).

10. Procédé de commande d'une colonne de charge, la colonne de charge (CS) étant configurée pour le chargement d'un véhicule (EV), comprenant les étapes suivantes :
a) réception d'au moins une région partielle d'une accréditation côté terminal (JCRED2) envoyée par un terminal mobile (MD) par le biais d'une connexion de communication en champ proche (NFC) par un dispositif de commande (CTR) associé à la colonne de charge (CS) ;
b) réception d'au moins une région partielle d'une accréditation côté véhicule (JCRED1) par le dispositif de commande (CTR) ;
c) configuration d'une connexion de commande entre le dispositif de commande (CTR) et le terminal mobile (MD) par le biais de l'interface de communication en champ proche (IFM) après réception de l'accréditation côté terminal (JCRED2) ;
dans lequel après configuration de la connexion de commande, les étapes suivantes sont réalisées :
d) envoi, par le dispositif de commande (CTR), d'au moins une région partielle de l'accréditation côté véhicule (JCRED1) par le biais de la connexion de communication en champ proche (NFC) au terminal mobile (MD) ;
e) réception d'au moins la région partielle de l'accréditation côté véhicule (JCRED1) par le terminal mobile (MD) et contrôle côté terminal d'au moins la région partielle de l'accréditation côté véhicule (JCRED1) à l'aide d'au moins la région partielle de l'accréditation côté terminal (JCRED2) ;
f) en cas de résultat positif du contrôle côté terminal, envoi d'un message de contrôle positif (CHK) par le terminal mobile (MD) au dispositif de commande (CTR) ; et
g) association de la colonne de charge (CS) au véhicule (EV) après réception du message de contrôle positif (CHK) par le dispositif de commande (CTR).

11. Procédé selon une des revendications précédentes 7 à 10, **caractérisé en ce que** le contrôle d'au moins une accréditation (JCRED1, JCRED2) ou d'une région partielle de celle-ci s'effectue au moins partiellement en collaboration avec au moins un serveur d'autorisation (SRV1,SRV2).

12. Procédé selon une des revendications précédentes 7 à 11, **caractérisé en ce qu'**une connexion de données sécurisée de manière cryptographique est configurée par le biais de la connexion de communication en champ proche (NFC).

13. Procédé selon une des revendications précédentes 7 à 12, **caractérisé en ce que** l'accréditation côté terminal (JCRED2) et/ou l'accréditation côté véhicule (JCRED1) contient un certificat numérique.

14. Procédé selon une des revendications précédentes 7 à 12, **caractérisé en ce que** l'accréditation côté terminal (JCRED2) et/ou l'accréditation côté véhicule (JCRED1) fait partie d'un certificat numérique.

15. Procédé selon une des revendications précédentes 7 à 14, **caractérisé en ce qu'**une adresse MAC du véhicule (EV) fait partie de l'accréditation côté véhicule (JCRED1) et/ou de l'accréditation côté terminal (JCRED2).
